# EUROPÄISCHE PATENTANMELDUNG

(11) **EP 2 224 729 A1**
(43) Veröffentlichungstag der Anmeldung: **01.09.2010**
(21) Anmeldenummer: 09002647.7
(22) Anmeldetag: 25.02.2009
(51) Int. Cl.: H04N 5/445, H04N 7/173

(54) **Verfahren und System zur Verarbeitung von Programminformationen eines zeitlich linear ausgestrahlten Mediums**

(71) Anmelder: MoreTV Broadcasting GmbH, 20097 Hamburg (DE)
(72) Erfinder: Jenzowsky, Stefan, 14167 Berlin (DE)
(74) Vertreter: Beetz & Partner

(57) **Zusammenfassung**

Die Erfindung betrifft ein System zur Verarbeitung von Programminformationen eines zeitlich linear ausgestrahlten Mediums.

Es wird vorgeschlagen, ein solches System mit eine Speichereinheit zum Speichern von Nutzerdaten mit einem benutzerspezifischen Merkmalsprofil, einer Datenverarbeitungseinheit zum Extrahieren von Merkmalen von Sendungen aus den Programminformationen und zum Vergleichen dieser Merkmale mit dem Merkmalsprofil des Nutzers und mit einem Empfehlungssystem zum Empfehlen und/oder Hervorheben wenigstens eines medialen Ereignisses aus den in den Programminformationen beschriebenen Ereignissen auszustatten.

## Beschreibung

Die Erfindung betrifft ein System zur Klassifizierung von Sendungen nach dem Oberbegriff des Anspruchs 1 und ein Verfahren zur Klassifizierung von Sendungen nach dem Oberbegriff des Anspruchs 10.

Das Umfeld, in das die vorliegende Erfindung fällt, ist durch zwei Herausforderungen geprägt. Zum einen stellt das Fernsehprogramm ein Massenmedium dar, d.h. es ist nicht auf die Bedürfnisse des individuellen Konsumenten zugeschnitten, sondern soll in einer einheitlichen Form einer großen Masse an Konsumenten genügen. Zum anderen sehen bekannte Methoden der Personalisierung des Programms, namentlich der persönliche Videorekorder "Personal Video Recorder" (PVR), eine interaktive Rolle des Konsumenten vor, weil dies eine Aktivität des Konsumenten voraussetzt, die dieser zuweilen als anstrengend und lästig empfindet. Dieser muss sich, um in den Genuss eines personalisierten Programms zu kommen, z.B. mittels eines "Electronic Program Guide" (EPG), sein persönliches Programm erst zusammenstellen, die Aufzeichnung abwarten und es dann abspielen.

Die Digitalisierung hat die Vielfalt an Programmen zusätzlich gefördert. Das Programm erreicht nicht nur via Satellit und Kabel mittlerweile den Zuschauer, sondern auch via IPbasierten Datentransfer, z.B. WebTV oder IPTV. Wachsender Beliebtheit erfreut sich insbesondere der Konsum von Inhalten aus dem Internet, die man mittlerweile, z.B. mit Hilfe von Set-Top-Boxen, auch auf den TV-Bildschirm bringen kann. Es ist eine überwältigende Anzahl an Inhalten und Informationen heutzutage Verfügbar und in der Zukunft wird dies noch zunehmen. Der Bedarf nach Führung, Strukturierung und Empfehlung der Vielzahl von Programmangeboten aus vertrauensvoller Quelle wächst proportional mit der wachsenden Vielfalt von Angeboten, angetrieben von der raschen technologischen Entwicklung unserer Zeit, die dazu führt, dass zugleich immer spezifischer auf den individuellen Geschmack und die individuellen Bedürfnisse zugeschnittene massenmediale Angebote bereitgestellt werden. Für den Konsumenten bedeutet dies einen Verlust an Zeit - er müsste entweder willkürlich in einem massenmedialen Programm suchen (z.B. "zappen") oder viel Zeit für die Suche entsprechend nach seinen Vorlieben und Interessen nach passenden Inhalten aufwenden.

Somit ist die Bildung von Bouquets bzw. Zusammenstellungen von medialen Inhalten zur Strukturierung dieser massenmedialen Vielzahl von hoher Relevanz für Nutzer von Medien in der Zukunft.

Die vorliegende Erfindung hat insbesondere zur Aufgabe, innerhalb des Aufbaus von strukturierten Empfehlungen (sog. "Recommendations") zur Strukturierung und Zusammenstellung bzw. Bouqetisierung der medialen Inhalte ein verbessertes Verfahren zur Erstellung, Erkennung, Klassifizierung, Strukturierung und/oder Übermittlung solcher Empfehlungen und Strukturierungshilfen zu schaffen.

Diese Aufgabe wird durch die Merkmale der unabhängigen Ansprüche gelöst. Vorteilhafte Weiterbildungen und Ausgestaltungen der Erfindung ergeben sich aus den Unteransprüchen.

Die Erfindung schlägt insbesondere System zur Verarbeitung von Programminformationen eines zeitlich linear ausgestrahlten Mediums vor.

Es wird insbesondere vorgeschlagen, ein solches System mit einer Speichereinheit zum Speichern von Nutzerdaten mit einem benutzerspezifischen Merkmalsprofil auszustatten, wobei das Merkmalsprofil wenigstens ein Merkmal von für den Nutzer interessanten Sendungen innerhalb des linear ausgestrahlten Mediums enthält. Ferner kann das System eine Datenverarbeitungseinheit zum Extrahieren von Merkmalen von Sendungen aus den Programminformationen und zum Vergleichen dieser Merkmale mit dem Merkmalsprofil des Nutzers umfassen. Ein weiteres Merkmal des erfindungsgemäßen Systems ist ein Empfehlungssystem zum Empfehlen und/oder Hervorheben wenigstens einer Sendung aus den in den Programminformationen beschriebenen Sendung wenn die Merkmale des Ereignisses abhängig von dem Ergebnis des Vergleichs der Merkmale der Sendung mit den Merkmalen des Merkmalsprofils.

Als "Sendungen" sollen in diesem Zusammenhang allgemein mediale Ereignisse, die in den Programminformationen beschrieben sind, bezeichnet werden.

Ein weiterer Aspekt der Erfindung betrifft ein Verfahren zur Verarbeitung von Programminformationen eines zeitlich linear ausgestrahlten Mediums.

Zur Verbesserung des Verfahrens wird vorgeschlagen, dass Nutzerdaten mit einem benutzerspezifischen Merkmalsprofil gespeichert werden, wobei das Merkmalsprofil wenigstens ein Merkmal von für den Nutzer interessanten Sendungen innerhalb des linear ausgestrahlten Mediums enthält. Ferner werden Merkmale von Sendungen aus den Programminformationen extrahiert werden und diese Merkmale mit dem Merkmalsprofil des Nutzers verglichen und eine Sendung aus den in den Programminformationen beschriebenen Sendungen wird abhängig von dem Ergebnis des Vergleichs der Merkmale der Sendung mit den Merkmalen des Merkmalsprofils empfohlen und/oder hervorgehoben.

Die verbesserte Anordnung und das verbesserte Verfahren hilft, das auch im Internet häufig genutzte Prinzip der nutzerverhaltens- und nutzerpräferenzgestützten Empfehlungen auf audiovisuelle Inhalte effizient zu übertragen und kann z.B. in oder in Kombination mit einem Empfangs- oder Anzeigegerät (z.B. einer Set-top Box) mit entsprechend ausgestatteter Software zur Anwendung kommen, mit dem Ziel, dem Nutzer/Zuschauer zu helfen, das zu sehen, was sie sehen möchten und keine Zeit mit aufwendigen Programmierungen oder mit langen Suchen zu verbringen. Ziel ist es dabei, das tägliche Leben der Nutzer/Zuschauer zu erleichtern. Sie sollen die Möglichkeit haben das zu sehen, was sie wirklich sehen wollen. Das ganze soll einfach, schnell, effizient und kostengünstig realisiert werden können. Dazu tragen die verbesserte Anordnung und das optimierte Verfahren bei der Erstellung von Empfehlungsstrukturen erheblich bei.

Aus Internet-Applikationen und Anwendungen (z.B. mittels Verfahren wie "Collaborative Filtering") sind Empfehlungssysteme bekannt, in denen verschiedene Algorithmen Anwendung finden. Dabei wird das Nutzungsverhalten des Internet-Users analysiert und z.B. die Kaufangebote auf einer Website werden individualisiert dargesstellt und/oder es werden Empfehlungen ausgesprochen.

Im Gegensatz zu bekannten Internet-Empfehlungssystemen operiert das erfindungsgemäße Empfehlungssystem in einem Raum von flüchtigen Ereignissen. Sendungen bzw. mediale Ereigisse sind insbesondere Sendungen im Fernsehen oder Radio, die nach einem vorgegebenen Programm zu einer vorgegebenen Zeit ausgestrahlt werden. Ein-unmittelbarer Eingriff des Benutzers ist daher nicht möglich. Programme, in denen Sendungen in einer vorgegebenen Zeitlichen Folge ausgestrahlt werden, sollen im Folgenden als zeitlich lineare Medien bezeichnet werden. Dieser Begriff umfasst insbesondere Radio- und Fernsehprogramme.

Eines der zentralen Probleme bei der Erstellung von Empfehlungen für zeitlich linear verlaufende Medieninhalte (also z.B. Fernsehen, Radio und ähnliche Broadcast-Medien) liegt in dem spezifischen zeitlich linearem Charakteristikum bei der Ausstrahlung von audiovisuellen Inhalten. Diese sind häufig Bestandteil eines linear verlaufenden Medienprogrammes z.B. eines Senders und daher von flüchtiger Natur. Einmal ausgestrahlt, sind sie versendet. Eine Chance zur nochmaligen Nutzung oder z.B. zur Aufzeichnung einer Sendung die dem Benutzer z.B. besonders gefallen hat, hat der Nutzer/Zuschauer nur wenn eine z.B. Wiederholung / Neu-Ausstrahlung in diesem oder einem anderen zeitlich linearen Programm (z.B. von dem jeweiligen Sender) vorgesehen ist - oder aber diese Sendung im Vorfeld aufgezeichnet worden ist.

Hat der Nutzer/Zuschauer die Sendung bzw. das mediale Ereignis verpasst und sie nicht aufgezeichnet, dann hat er in der Regel keine Möglichkeit, diesen audiovisuellen Inhalt zu rezipieren. Er könnte sie evtl. beim Senderarchiv gegen eine Gebühr nachbestellen. Ohne zusätzliche Ausgaben und zeitlichen Aufwand ist-dies jedoch nicht möglich.

Weitere Merkmale der Erfindung und deren Vorteile ergeben sich aus der folgenden Figurenbeschreibung. Die Figuren stellen Ausführungsbeispiele dar, die den durch die Patentansprüche definierten Schutzbereich nicht einschränken.

### Es zeigen:

- Fig. 1: eine schematische Darstellung von Sendungen in einem zeitlich linearen Medium,
- Fig. 2: ein Empfehlungssystem in einem zeitlich konstanten Rahmen,
- Fig. 3: eine Illustration verschiedener Merkmalssets für ein Empfehlungssystem,
- Fig. 4: ein erfindungsgemäßes System zur Verarbeitung von Programminformationen,
- Fig. 5: eine Darstellung von Empfehlungen auf einem Benutzer-Endgerät,
- Fig. 6: ein erfindungsgemäßes Empfehlungssystem für Endgeräte ohne Rückkanal und
- Fig. 7: ein Empfehlungssystem nach einer weiteren Ausgestaltung der Erfindung mit einem zentralen Server für Nutzerdaten.

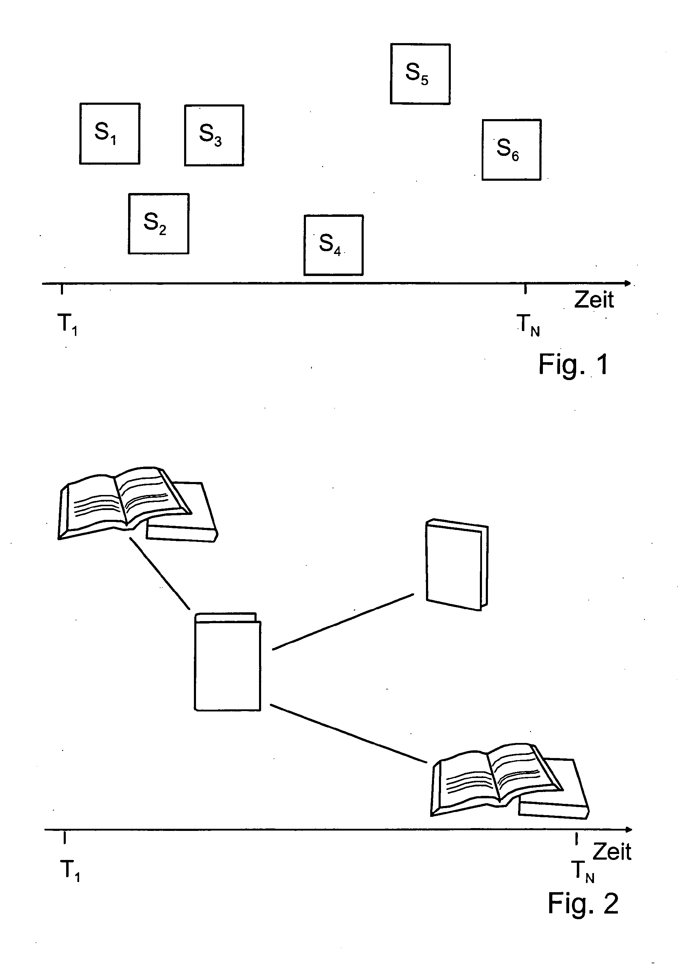

Figur 1 stellt die Problematik von der Erfassung von audiovisuellen Inhalten dar - bedingt durch ihre einmalige Ausstrahlung auf einer linearen Zeitachse.

Die Herausforderung der verbesserten Anordnung und des verbesserten Verfahrens liegt darin, eine Stabilität in den aus den Sendungen S1 - S1 bestehenden flüchtigen Raum zu bringen, damit ein Empfehlungssystem sinnvoll operieren kann. Die verbesserte Vorrichtung und das verbesserte Verfahren muss also die Linearität der Ausstrahlung von audiovisuellen Inhalten bei der Erstellung von Empfehlungen, z.B. von Aufnahmeempfehlungen oder automatisierten Aufnahmen in Rechnung stellen und ein prädiktives Element in den zeitlich flüchtigen Raum bringen. Auch die Tatsache, dass Sendungen in überlappenden Zeitintervallen ausgestrahlt werden können, muss berücksichtigt werden.

In bekannten Empfehlungssystemen für statische Objekte werden Empfehlungen basierend auf den Prinzipien des Collaborative Filtering generiert. Damit bilden diese Prinzipien eine allgemein bekannte und verwendete Grundlage bei der Erzeugung von Empfehlungen und deren Nutzung z.B. im Bereich des Online-Handels im Internet (u.a. so bei Amazon.com). Dabei kommen verschiedene Verfahren des Collaborative Filtering wie z.B. das Nutzer-analogiebasierte Verfahren (z.B. Clusteranalysen) oder item-analogiebasierte Verfahren (z.B. Clusteranalysen) zum Einsatz. Aber auch inhaltsbasierte Verfahren Content Based Filtering (u.a. Inhaltsanalyse oder Genomanalyse, wie z.B. bei Pandora.com) zum Einsatz. Solche Verfahren sind u.a. im Internethandel z.B. für Bücher oder Musik im Einsatz.

Für die Anwendung in zeitlich linearen Medienumgebungen sind solche Verfahren, die z.B. auch im internetbasierten Handel Anwendung finden, nicht anwendbar. Die Verallgemeinerung der bekannten Verfahren der Analogiebildung (z.B. item-based Collaborative Filtering, User-based Collaborative Filtering, content-based Filtering, Clusteranalysen, Faktorenanalysen, und hybride Verfahren) für zeitlich linear ausgestrahlte mediale Inhalte und damit zeitlich lineare Mediensysteme ist wegen des sich ständig verändernden Bezugsrahmens schwierig.

Diese bekannten und beschriebenen Verfahren (z.B. des Collaborative Filtering) ermöglichen heute in zeitlich stabilen Umgebungen Empfehlungssysteme, die den Nutzern interessante Hinweise gibt. Dabei beruhen sie auf der Grundannahme, dass sich Menschen mit gleichen Interessen auch für ähnliche Suchergebnisse interessieren. Dabei ist ein Empfehlungssystem ist umso nützlicher, je mehr Anwender Bewertungen abgegeben haben bzw. je größer die Datenmenge ist (z.B. in der Clusteranalyse). Z.B. wird einem Internet-Nutzer auf der Suche nach Büchern mitgeteilt, was andere Kunden, die ein bestimmtes Buch gekauft haben, noch für Bücher gekauft haben. Erweitert wird diese passive Methode bei manchen Anbietern (TIVO,movielens) durch ein integriertes Bewertungssystem.(Daumen hoch, Daumen runter). So wird dem Nutzer Content empfohlen, welcher von anderen Nutzern mit ähnlichem Bewertungsprofil rezipiert wurde.

Das erfindungsgemäße System arbeitet in erster Linie mit passiven Userinteraktionen, lässt aber dem geneigten Nutzer die Möglichkeit der aktiven Steuerung.

Fig. 2 illustriert ein Empfehlungssystem in einem zeitlich konstanten Rahmen. Ein Konsument hat sich ein Buch C gekauft. Dieses Buch wurde auch von anderen Käufern gekauft/gelesen, die auch die Bücher A, B gekauft/gelesen haben. Die Interessen des Konsumenten und der anderen Käufer waren/sind ähnlich gelagert. Aufgrund dieser Hinweise wird dem Konsumenten vorgeschlagen, sich auch das Buch C zu kaufen.

Der stabile Rahmen für das Empfehlungssystem ist gegeben durch die zeitlich stabile Verfügbarkeit der zu empfehlenden Objekte - zu jeder Zeit. Denn sie werden physisch in einem Lager, auf das der Konsument jederzeit Zugriff hätte bzw. der Händler. So ist der gegenwärtige Zeitpunkt T₁ gleichzusetzen mit einem beliebigen Zeitpunkt in der Zukunft (T_{N}). Dies ist aber aufgrund der Beschaffenheit und dem Charakteristikum der "Flüchtigkeit" bei Inhalten in zeitlich linear organisierten Mediensystemen nicht gegeben.

Durch die bisher bekannten Verfahren der Empfehlung können in der Zukunft liegende Inhalte (bzw. in Zukunft in einem zeitlich linearen Mediensystem ausgestrahlte Inhalte) nicht sinnvoll miteinander in Verbindung gebracht worden, da in der Zukunft liegende Inhalte nicht sinnvoll einem Nutzer oder dem Profil des Users/Zuschauer zugeordnet werden können. Vielmehr gehen bisher bekannte Verfahren davon aus, dass die Nutzung z.B. eines Inhalts der bedingende Faktor zur Erstellung eines statistischen Zusammenhangs ist. Das heißt, dass in zeitlich linearen Mediensystemen bislang Empfehlungen aus Nutzungsdaten über die oben beschriebenen und bekannten Verfahren nur ex-post-facto generiert werden können. Solche Empfehlungen sind jedoch weniger nützlich, da sie z.B. die vollständige automatische Aufnahme einer Sendung (i.e. von deren Ausstrahlungsbeginn an) nicht ermöglichen.

Die hier beschriebene Erfindung ermöglicht ein verbessertes Empfehlungssystem für zeitlich lineare Mediensystemen und ermöglicht somit z.B. die vollständige, insbesondere automatische Aufnahme einer Sendung (i.e. von deren Ausstrahlungsbeginn an) in einem zeitlich linearen Mediensystem. Z.B. kann die automatische Programmierung zur automatischen Aufzeichnung der empfohlenen Sendung führen, wenn sie z.B. ein zuvor festgelegtes Mindestmaß an Übereinstimmungen oder Ähnlichkeiten erreicht worden ist.

Die hier beschriebene Erfindung nutzt die spezifizischen Chrakteristika von zeitlich linearen Medieninhalten, indem es in Rechnung stellt, dass die überwiegende Mehrzahl aller medialen Ereignisse bzw. Sendungen in einem zeitlich linearen Mediensystem den Charakter einer Serie haben. Und für diese Ereignisse kann eine prädiktive Empfehlung dadurch ermöglicht werden, dass eines der beschriebenen und bekannten Verfahren der Empfehlungsgenerierung auf eines der vorherigen oder z.B. auf das letzte Serienelement verwendet wird - und dann auf die folgenden Serienelemente fortgeschrieben wird.

Einfach zu erkennen und aus den Programminformationen zu extrahieren sind klassische Serien, die täglich oder wöchentlich zur gleichen Zeit unter dem gleichen Titel ausgestrahlt werden. Eine besondere Herausforderung stellen in diesem Zusammenhang nun solche Sendungen dar, die zwar Elemente eines zeitlich linear organisierten Mediensystems sind, die aber nicht eindeutig einer Serie von Sendungen eines zeitlich linear organisierten Mediensystems zuzuordnen sind. Beispiele für solche Pseudoserien sind Nachrichtensendungen oder Reportagen aus China im Umfeld der olympischen Spiele.

Das verbesserte Verfahren und die verbesserte Anordnung die der hier beschriebenen Erfindung zugrunde liegt, schreibt daher u.a. auch solchen Elementen eines medialen Systems Charakteristika einer oder mehrerer Serien von Elementen eines zeitlich linear organisierten Mediensystems (z.B. Sendungen) zu, auch wenn sie im strengen Sinne keine Serie sind. Es werden also durch das verbesserte Verfahren und die verbesserte Anordnung eine große Anzahl statistisch bedeutsamer Pseudo-Serien in zeitlich linearen Mediensystem kreiert, die ihrerseits die Anwendung eines der für zeitunabhängige Räume bekannten und beschriebenen Empfehlungssysteme ermöglichen, das dann unter Ausnutzung des Seriencharakters bzw. der Pseudo-Serie fortgeschrieben werden kann und somit eine prädiktive Empfehlung ermöglicht.

Ein Beispiel: Eine klassische Serie, wie z.B. in Fernsehen "Grey's Anatomy - Die jungen Ärzte", ist als solche leicht zu identifizieren. Sie wird z.B. jeden am Mittwoch um 20:15 Uhr auf Pro7 ausgestrahlt. Personal Video Recorder bzw. Software, wie z.B. das amerikanische TiVo stellen bereits sogenannte Serienassistenzfunktionen bereit ("Season Pass"). Hier wird eine Serie automatisch aufgenommen, nachdem man ein Element der Serie entsprechend markiert und programmiert, wenn der Nutzer die entsprechenden Einstellungen vornimmt. Dadurch wird eine Fortschreibung auf weitere Serienelemente ermöglicht. Aber diese Serien sind auch ,klassische Serien'. Sie werden zu regelmäßigen Zeiten ausgestrahlt und sind auch inhaltlich (auf redaktioneller Basis und/oder aufgrund ihrer dramaturgischen Erzählweise) als solche offensichtlich erkennbar.

Serien, die auf den ersten Blick nicht als solche erkennbar sind bzw. nach dieser Definition als Serie nicht bezeichnet werden können, können bislang von einer solchen teilautomatisierten Programmierung nicht erfasst werden. Wenn diese Pseudoserie aber nun Kriterien bzw. Merkmale erfüllt, die sie für den User/Zuschauer mit hoher Wahrscheinlichkeit interessant erscheinen lassen, ist eine automatische oder teilautomatische Programmierung von Aufnahmen bisher nicht möglich.
Die Festlegung, dass eine Serie eine Serie ist, wenn die sie zu regelmäßigen Zeiten und auf inhaltlicher Ebene einen dramaturgischen fortwährenden Erzählstrang mit den gleichen Darstellern haben, reicht demnach für die Personalisierung des Sehverhaltens zu unseren gesetzten Zielen nicht aus.

Folglich müssen die zwei Merkmale um ein oder mehrere Merkmale erweitert werden, so dass mit Hilfe von einem Set von Merkmalen, Pseudo-Serien kreiert-werden können. Die beschriebene verbesserte Anordnung und das verbesserte Verfahren nutzt daher eine Reihe von Merkmalen aus, deren Kombination eine Personalisierung des Sehverhaltens ermöglicht, aber zugleich auch ein Vergleich mit anderen Usern/Zuschauern ermöglicht.

Ein Beispiel für eine solche Pseudoserie sind die oben erwähnten Reportagen aus China im Umfeld der olympischen Spiele. Sie könne aus den Programminformationen durch eine Suche nach dem Genre "Dokumentarfilm" und durch die Suche nach den Schlagworten "China" und "Olympia" oder Olympiade" oder "O-lympische Spiele" herausgefiltert werden.

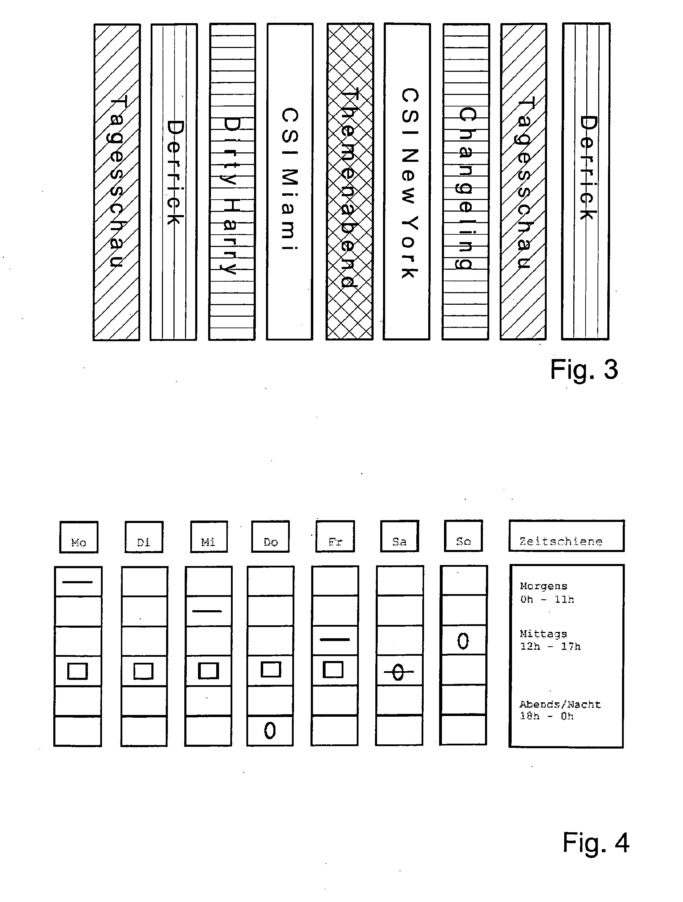

Fig. 3 zeigt einige mögliche Merkmale von Pseudo-Serien, die dann entsprechend als solche klassifiziert/markiert, aufgezeichnet oder auch im Sinne eines Empfehlungssystem anderen Usern/Zuschauern mit ähnlichen (Sets von) Merkmalen empfohlen werden. Sendungen mit gleichen Merkmalsets sind im Hintergrund mit der gleichen Schraffur versehen.

### Merkmalset 1 (Vertikale Schraffur):

Merkmale: gleicher Sender, gleicher Ausstrahlungstag, gleicher Ausstrahlungsrhythmus, gleiche Uhrzeit, gleicher Titel, gleiches Genre "Soap Opera", gleiche Darsteller, ähnliche Handlungen.

So wird z.B. Derrick oder Grey's Anatomy nach einmaliger/mehrmaliger Nutzung oder Aufnahme immer wieder aufgezeichnet. (Oder z.B. anderen Usern/Zuschauern mit identischen oder ähnlich gelagerten Relevant Set von Merkmalen als möglicher interessanter audiovisuellen Inhalt empfohlen.) Die Anzahl von Aufzeichnungen bzw. Aufzeichnungen mit nachfolgender Abspielung, die eine automatische Aufnahme der Serie auslöst, kann vom Benutzer einstellbar gestaltet werden. Ein Default-Wert könnte auf zwei gesetzt werden.

Merkmalset 2 (Schräge Schraffur):
Merkmale: gleicher Sender, gleiche Uhrzeit(en), gleicher Titel, gleiches Genre "Nachrichtenmagazin", dann wird z.B. "Tagesschau" aufgezeichnet, die eigentlich keine Serie im klassischen Sinne ist. So wird eine Nachrichtensendung zu einer Pseudo-Serie.

Das Nachrichtenmagazin "Tagesschau" läuft allerdings mehrmals täglich um diese Uhrzeiten: 5:00, 9:00, 14:00. 15:00, 17:00, 20:00. Jede Sendung aufzuzeichnen würde z.B. die Festplatte eines PVR rasch an ihre Kapazitätsgrenzen bringen und würde auch den Sinn der Aufzeichnung widersprechen. Schließlich ist wahrscheinlich der User/Zuschauer in diesem Fall nur an den neuesten Nachrichten interessiert. Daher muss unter diesen Umständen eine Sonderfunktion eingreifen, die ebenfalls technisch einzuprogrammieren ist, so dass immer nur die neueste Sendung aufgezeichnet wird, um die Festplattenkapazität zu schonen.

### Merkmalset 3 (Ohne Schraffur):

Hier überschneidet sich das Merkmalset 3 mit den Merkmalen aus dem Merkmalset 1. Dies liegt daran, dass es sich hierbei um ein Spin-Off Serie ("CSI- New York") von einer bereits existierenden Serie "CSI - Miami" handelt. Aber ein Empfehlungssystem, dass nach den konventionellen bzw. klassischen Kriterien einer Serie agiert, würde diese Spin-Offs nicht anzeigen bzw. empfehlen und/oder aufzeichnen.

### Merkmalset 4 (Horizontale Schraffur):

Das Merkmalset 4 kann aus einem oder mehreren Merkmalen bestehen, z.B. Name/Person und Funktion. Die Person "Clint Eastwood" zum Beispiel, kann als Schauspieler oder Regisseur auftreten. Wenn mindestens einer dieser Merkmale auftaucht, dann wird eine Empfehlung ausgesprochen oder die Sendung aufgezeichnet. So tritt bspw. Clint Eastwood) einmal als Schauspieler in "Dirty Harry" und ein anderes Mal als Regisseur von "Changeling" auf.

Merkmalset 5 (Rautenförmige Schraffur):
Das Merkmalset 5 schaut nicht auf die Person, auf das Genre oder auf Ausstrahlungszeiten. Sondern ist Themen-orientiert, z.B. wegen der anstehenden Olympiade alles rund um "China". Es wird dann alles empfohlen oder aufgezeichnet, was China zum inhaltlichen Gegenstand hat. Alle Spielfilme, Dokumentationen oder andere Informationen und Ereignisse China betreffen, z.B. in einem Themenabend auf Arte oder auch in allen anderen Programmen, wie z.B. 3Sat. Auch hier ist es möglich die Anzahl an Programmen oder auch konkrete Programme festzulegen.

Die Merkmalsets können beliebig fortgeführt werden. Von besonderer Bedeutung ist neben der Kombination von verschiedenen Merkmalen, ebenso die Gewichtung von Merkmalen. Z.B. wird deutlich, dass das Merkmal "Thematik" anders gewichtet werden muss als z.B. das Merkmal "Uhrzeit". Diese Gewichtungen können auch vom Nutzer oder von einem Anbieter individuell festgelegt/eingestellt/adjustiert werden und in einer Datenstruktur zusammen mit den entsprechenden Merkmalen gespeichert werden.

Figur 4 gibt eine grafische Darstellung von der Verteilung von Merkmalsets wider wie auch eine Verknüpfung von Merkmalsets bzw. einer jeweiligen festgelegten Merkmalübereinstimmung.

Die Merkmalsets werden miteinander abgeglichen. Wenn es eine Übereinstimmung von einem oder mehreren Merkmalen gibt, wird eine Empfehlung ausgesprochen oder die betreffende Sendung aufgezeichnet.

Die Merkmale definieren eine Serie. Die Merkmale werden individuell, d.h. abhängig von dem nutzerspezifischen Merkmalsprofil, festgelegt:
□= z.B. ein Merkmalset, z.B. eine Daily Soap, die täglich Werktags läuft,
---- = ein Merkmalset, z.B. Reportage "Asien", markiert von ○ = ein Merkmalset, z.B. Themenabend "China", markiert von User/Zuschauer C
-○- = ein Merkmalset, z.B. die Kombination von zwei oder mehreren Merkmalen, die eine Empfehlung und/oder Aufzeichnung auslöst. Hier wird nach dem Abgleich der User-Profile festgestellt, dass ein ähnlich gelagertes Interesse vorliegt. Entsprechend wird anonymisiert Zuschauer B durch die Markierung von Zuschauer C auf den Themenabend "C" hingewiesen. Die er dann ablehnen oder als Empfehlung akzeptieren kann.

Die Merkmale werden nach verschiedenen Verfahren (u.a. Schlagwörtern und Algorithmen) festgelegt.

Sender planen die Ausstrahlung zeitlich linearen Medieninhalte wie z.B. des Radio- oder Fernsehprogramms, das man z.B. einer TV-Zeitschrift entnehmen kann. Nach den bisher erwähnten Beispielen, gibt es eine oder mehrere Merkmale, nach denen die neue Vorrichtung sich ausrichtet bzw. nach denen das neue Verfahren zum Einsatz kommt.

Die Datengrundlage hierfür bilden die Programminformationen bzw. Daten aus den digitalen Programmzeitschriften/Electronic Program Guide (EPG) und den User-Profilen. Die entsprechend nach dem verbesserten Empfehlungssystem ausgewertet und verarbeitet werden. In derartigen digitalen Programmzeitschriften, die über Satellit bzw. Kabelnetz zusammen mit den betreffenden Programmen übermittelt werden oder in bestimmten Intervallen von den Receivern bzw. Endgeräten angefordert werden, sind viele Merkmale enthalten, die von dem Empfehlungssystem ausgewertet und ausgenutzt werden können. Neben dem Titel und dem Zeitintervall, in dem die Sendung ausgestrahlt wird, werden auch eine kurze Zusammenfassung des Inhalts, die Namen von Hauptdarstellern und/oder eines Regisseurs übermittelt. Merkmale, die das Empfehlungssystem auswerten kann umfassen auch Schlagworte in der Zusammenfassung und/oder Namen der Schauspieler.

In einem Ausführungsbeispiel der Erfindung gibt das verbesserte Verfahren bzw. die verbesserte Vorrichtung ohne Rückkanal Empfehlungen an den Nutzer aus. Hierbei werden die Informationen der Pseudoserien zusätzlich per Satellit oder per Kabel an den Receiver bzw. an eine Set-Top-Box übermittelt. Das Gerät auf der Empfängerseite wertet diese Informationen anhand eines lokal gespeicherten Nutzerprofils aus und zeigt dem Nutzer die Empfehlungen an.

Basis hierfür bilden zusätzliche Identifikationsdaten wie die oben genannten Zusammenfassungen, Darstellerlisten oder Klassifizierungen des Genres, welche ein mediales Ereignis bzw. eine Sendung genauer beschreiben.

Somit kann dieses Verfahren ohne Rückkanal genutzt werden.

Das Nutzerprofil kann durch aktive und passive Nutzerinteraktionen definiert und geformt werden. Aktiv können neue Pseudoserien angelegt werden. Passiv werden Nutzerinteraktionen ausgewertet. Das vollständige Anschauen bzw. Anhörung einer Sendung kann zu einer höheren Gewichtung der Merkmale der betreffenden Sendung in dem Merkmalset des Benutzers führen, während das ungesehene löschen der aufgenommenen Sendung zu einer Reduktion der Gewichtung der Merkmale der betreffenden Sendung im Merkmalset des Benutzers führen kann. Dadurch kann ein selbst lernendes System geschaffen werden, das auch an veränderliche Vorlieben des Benutzers anpassen kann.

Wichtig ist hierbei der Aspekt der Vererbung, welcher vom System angepasst werden kann. Ein empfohlener Event generiert auch passive Nutzerinteraktionen. Aber ohne Nutzerinteraktionen wird in einem vorteilhaften Ausführungsbeispiel nicht auf Basis einer aufgenommenen Empfehlung eine neue Empfehlung ausgesprochen. Dadurch kann eine ungewünschte Verselbständigung des Systems unterbunden werden.

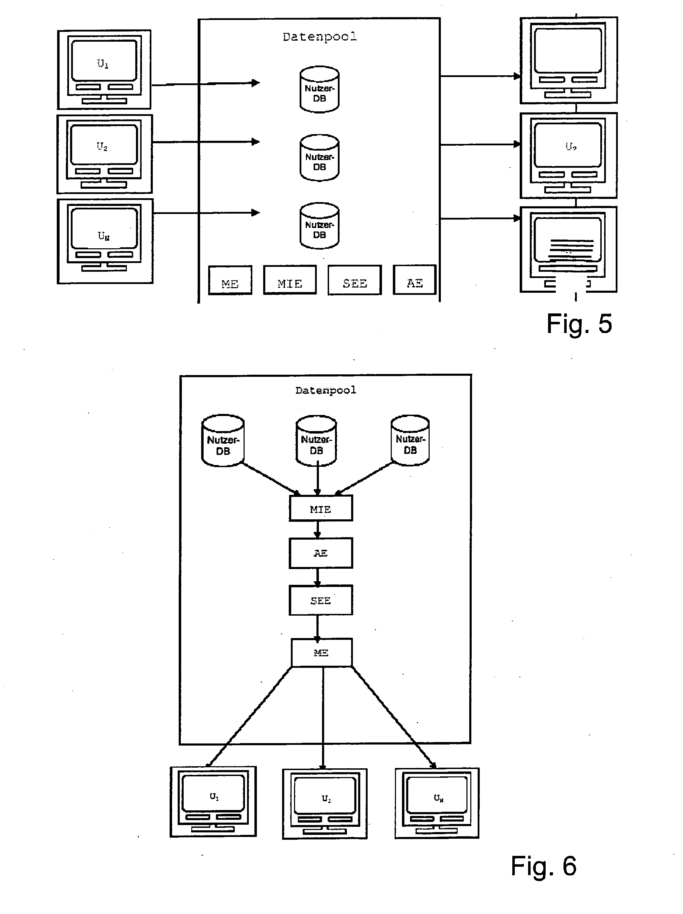

Figur 5 illustriert ein weiteres Ausführungsbeispiel der Erfindung für Geräte mit Rückkanal.

Das System legt für die User/Zuschauer U₁ - Uₙ abhängig von ihrem individuellen aktiven oder passiven Sehverhalten Nutzerprofile an, die in einem Datenpool gesammelt werden, z.B. in einem externen Server. Dort werden sie mit Hilfe von anderen technischen Elementen ausgewertet und verarbeitet. Als Resultat eines Abgleichs zwischen den in den Nutzerprofilen gespeicherten Merkmalsprofilen und den Merkmalsprofilen von Sendungen bzw. Sendungen können Empfehlungen an die U-ser/Zuschauer U₁ - Uₙ ausgesprochen und/oder entsprechende Handlungen, z.B. Aufzeichnungen ausgelöst werden. Die Empfehlungen bzw. die Befehle zum Aufzeichnen der Sendungen können automatisch an die Empfangsgeräte der Nutzer übertragen werden oder vom Benutzer abgerufen werden. Eine solche Übertragung bzw. ein solcher Abruf erfolgt vorzugsweise zusammen mit der Übertragung bzw. dem Abruf einer elektronischen Programmzeitschrift.

Die generierten Daten aus den Nutzerprofilen werden vom Empfehlungssystem anonymisiert behandelt. Wenn aufgrund der Vorlieben eines ersten Zuschauers Empfehlungen an einen zweiten Zuschauer mit ähnlichen oder identischen Vorlieben ausgesprochen werden, weiß der zweite Zuschauer nicht auf wessen Vorlieben bzw. auf wessen Sehverhalten die Empfehlungen basieren.

Fig. 6 illustriert schematisch ein erfindungsgemäßes Empfehlungssystem basierend auf einer User-Profile - Prozessdarstellung. Zur Erzeugung der Empfehlungen werden die Daten aus den Nutzerprofilen miteinander abgeglichen und durchlaufen wie in Figur 6 abgebildet verschiedene Stationen.

Die Mischeinheit (MIE) sammelt die Daten aus den Nutzerprofilen, die von der Analyseeinheit (AE) ausgewertet werden. Die Ergebnisse dieser Analyse definieren die Serien wie auch die Pseudo-Serien, die den entsprechenden Nutzer mit hoher Wahrscheinlichkeit interessieren. Dies geschieht durch eine Serieneinheit (SEE). Eine Managementeinheit (ME) vergleicht das Sehverhalten der User miteinander und sendet entsprechend der Korrelation von Merkmalen Empfehlungen an die User mit gleichen oder ähnlichen Sehinteressen aus. Mathematisch basiert das Empfehlungssystem dann, wie oben beschrieben, auf Faktoren- und Clusteranalysen.

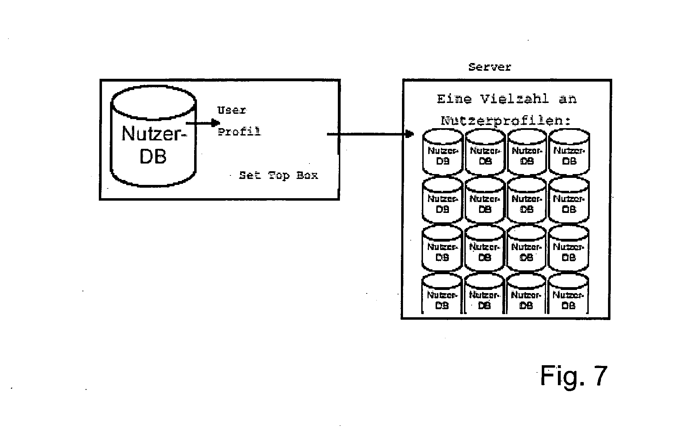

Fig. 7 illustriert eine Set-Top Box und eine Nutzerdatenbank in einem erfindungsgemäßen System. Die Set-Top Box kann bspw. die User-Daten erfassen und an den Server weiterleiten. Dort werden die Daten von U_{N} Users/Zuschauer erfasst.

Die verbesserte Anordnung und das verbesserte Verfahren haben den Vorteil einer verbesserten Empfehlungsgenerierung für zeitlich lineare Medienumgebungen.

Die verbesserte Anordnung und das verbesserte Verfahren haben ferner den Vorteil, dass aufgrund der Konstruktion von virtuellen Serien die bekannten und beliebten Verfahren der Empfehlungsgenerierung auch auf zeitlich lineare Medienumgebungen angewendet und ausgedehnt werden können.

Die verbesserte Anordnung und das verbesserte Verfahren haben den Vorteil der Zeitersparnis auf Seiten der Nutzer, da ein Nutzer u.a. durch ein prädiktives Empfehlungssystem auf die Programmierung eines Videorekorders verzichten kann. Die Programmierung kann automatisch erfolgen oder durch das Empfehlungssystem stark vereinfacht werden. Ein umständliches Suchen in Programmzeitschriften oder elektronischen Programminformationen kann entfallen oder sich auf eine von dem Empfehlungssystem getroffene Vorauswahl beschränken.

Die verbesserte Anordnung und das verbesserte Verfahren haben den Vorteil, dass der User/Zuschauer mehr von solchen medialen Inhalten konsumieren kann, die seinem Profil, seinen Neigungen und Vorlieben entsprechen.

Die verbesserte Anordnung und das verbesserte Verfahren haben den Vorteil, dass dem Nutzer ein stärker personalisiertes Fernsehangebot zur Verfügung gestellt werden kann.

## Patentansprüche

1. System zur Verarbeitung von Programminformationen eines zeitlich linear ausgestrahlten Mediums,
**gekennzeichnet durch**
a. eine Speichereinheit zum Speichern von Nutzerdaten mit einem benutzerspezifischen Merkmalsprofil, wobei das Merkmalsprofil wenigstens ein Merkmal von für den Nutzer interessanten Sendungen innerhalb des linear ausgestrahlten Mediums enthält,
b. eine Datenverarbeitungseinheit zum Extrahieren von Merkmalen von Sendungen aus den Programminformationen und zum Vergleichen dieser Merkmale mit dem Merkmalsprofil des Nutzers und
c. ein Empfehlungssystem zum Empfehlen und/oder Hervorheben wenigstens eines medialen Ereignisses aus den in den Programminformationen beschriebenen Ereignissen wenn die Merkmale des Ereignisses abhängig von dem Ergebnis des Vergleichs der Merkmale der Sendung mit den Merkmalen des Merkmalsprofils.

2. System nach Anspruch 1, **dadurch gekennzeichnet, dass** das Empfehlungssystem zum Empfehlen und/oder Hervorheben des wenigstens eines medialen Ereignisses automatisch eine Aufnahme der Sendung auf einer dem Nutzer zugeordneten Speichereinheit programmiert.

3. System nach einem der vorhergehenden Ansprüche, **dadurch gekennzeichnet, dass** das System in ein empfängerseitiges Endgerät integriert ist.

4. System nach einem der Ansprüche 1 bis 2, **dadurch gekennzeichnet, dass** die Speichereinheit, die Datenverarbeitungseinheit und das Empfehlungssystem und in einen zentralen Nutzerdatenserver zur Verwaltung einer Vielzahl von Nutzerdaten integriert sind, der dazu ausgelegt ist, die Empfehlungen auf ein Nutzerendgerät zu übertragen.

5. System nach einem der vorhergehenden Ansprüche, **dadurch gekennzeichnet, dass** das Empfehlungssystem dazu ausgelegt ist, Benutzereingriffe auszuwerten und das Merkmalsprofil abhängig von den Benutzereingriffen anzupassen.

6. System nach einem der vorhergehenden Ansprüche, **dadurch gekennzeichnet, dass** das Empfehlungssystem dazu ausgelegt ist, Benutzereingriffe eines ersten Benutzers auszuwerten und zur Erzeugung von Empfehlungen führ einen zweiten Benutzer zu verwerten, dessen Merkmalsprofil wenigstens eine hohe Ähnlichkeit zu dem Merkmalsprofil des ersten Benutzers hat.

7. System nach einem der vorhergehenden Ansprüche, **dadurch gekennzeichnet, dass** das Empfehlungssystem dazu ausgelegt ist, mehrere Sendungen mit überschneidenden Merkmalen zu einer Pseudoserie zusammenzufassen und zu empfehlen und/oder aufzunehmen.

8. System nach den Ansprüchen 2 und 7, **dadurch gekennzeichnet, dass** das Empfehlungssystem dazu ausgelegt ist, maximal eine vorgegebene Anzahl von Elementen einer Pseudoserie in der Speichereinheit vorzuhalten und das jeweils älteste Element nach der Aufnahme eines neuen Elements zu löschen.

9. System nach einem der vorhergehenden Ansprüche, **dadurch gekennzeichnet, dass** die von der Datenverarbeitungseinheit aus den Programminformationen extrahierten Merkmale neben einem Titel und/oder einer Sendezeit der Sendung wenigstens ein weiteres Merkmal aus einer Inhaltszusammenfassung der Sendung umfasst.

10. Verfahren zur Verarbeitung von Programminformationen eines zeitlich linear ausgestrahlten Mediums,
**dadurch gekennzeichnet, dass**
a. Nutzerdaten mit einem benutzerspezifischen Merkmalsprofil gespeichert werden, wobei das Merkmalsprofil wenigstens ein Merkmal von für den Nutzer interessanten Sendungen innerhalb des linear ausgestrahlten Mediums enthält,
b. Merkmale von Sendungen aus den Programminformationen extrahiert werden und diese Merkmale mit dem Merkmalsprofil des Nutzers verglichen werden und
c. eine Sendung aus den in den Programminformationen beschriebenen Ereignissen abhängig von dem Ergebnis des Vergleichs der Merkmale der Sendung mit den Merkmalen des Merkmalsprofils empfohlen und/oder hervorgehoben wird.
